# EUROPEAN PATENT APPLICATION

(11) **EP 3 242 106 A1**
(43) Date of publication of application: **08.11.2017**
(21) Application number: 15875715.3
(22) Date of filing: 30.12.2015
(51) Int. Cl.: F41H 1/02, B32B 18/00, F41H 5/04

(54) **BULLETPROOF PANEL**

(30) Priority: 31.12.2014 KR 20140195170
(71) Applicant: Kolon Industries, Inc., Gwacheon-si, Gyeonggi-do 13837 (KR)
(72) Inventor: SIM, Jae Hyung, Yongin-si Gyeonggi-do 16910 (KR)
(74) Representative: Merkle, Gebhard
(86) International application number: PCT/KR2015/014487
(87) International publication number: WO 2016/108621

(57) **Abstract**

A bulletproof panel of the present invention includes: (i) a ceramic plate A; (ii) at least one phenol resin impregnated aramid fabric laminate C having phenol resin impregnated aramid fabrics C1, C2 and C3 which are laminated thereon; and (iii) an epoxy resin impregnated fabric B disposed between the ceramic plate A and the phenol resin impregnated aramid fabric laminate C, and impregnated with an epoxy resin. The phenol resin impregnated aramid fabrics C1, C2 and C3 may be aramid fabrics impregnated with a phenol resin, and aramid fabrics impregnated with a phenol/polyvinyl butyral mixture resin. In the present invention, since the epoxy resin impregnated fabric B is disposed between the ceramic plate A and the phenol resin impregnated aramid fabric laminate C to increase the adhesive strength therebetween, the ceramic plate A and the phenol resin impregnated aramid fabric laminate C are not delaminated from each other even under a high-temperature environment, and thereby greatly enhancing the bulletproof performance. Further, there is no need to insert thermoplastic adhesive films between the phenol resin impregnated aramid fabrics C1, C2 and C3 like in the prior art, and thereby greatly improving the workability.

## Description

### [Technical Field]

The present invention relates to a bulletproof panel, and more specifically, to a bulletproof panel in which a ceramic plate and a phenol resin impregnated aramid fabric laminate constituting the bulletproof panel are firmly adhered with each other by an epoxy resin impregnated fabric, thereby preventing an occurrence of delamination therebetween, and significantly enhancing bulletproofing performance and workability under a high-temperature environment.

### [Background Art]

A bulletproof product is a product for protecting a human body from bullets or shells, and bulletproof performance of the bulletproof product depends greatly on the material used.

Among such materials for bulletproofing, high density polyethylene has a specific gravity of 0.98, which is lower than that of water, so that it is widely used as a bulletproof material.

However, high density polyethylene has characteristics that it can be greatly deformed if physical shock is applied thereto during use and has heat-sensitive characteristics, such that there is a limit to obtaining excellent bulletproof performance.

In general, as other bulletproof materials, a wholly aromatic polyamide fiber, commonly referred to as an aramid fiber, includes a para-based aramid fiber having a structure in which benzene rings are connected linearly through an amide group (-CONH) and a meta-based aramid fiber which has a connection structure different from the para-based aramid. The para-based aramid fiber has excellent characteristics such as a high strength, high elasticity and low shrinkage. Since the para-based aramid fiber has high enough strength so as to be able to lift a 2 ton vehicle with a thin cable having a thickness of about 5 mm, it is widely used for bulletproofing.

A composite material for bulletproofing is commonly manufactured by processes of including: preparing an aramid fabric using a para-based aramid fiber; immersing the prepared aramid fabric in a resin and drying the resin to manufacture aramid fabric prepregs; and laminating the manufactured aramid fabric prepregs in many layers and curing the laminated fabrics to complete the composite material.

Meanwhile, a bulletproof panel including a ceramic plate (hereinafter referred to as a "ceramic bulletproof panel") has been manufactured by laminating a high strength fabric such as an aramid fabric in many layers on the ceramic plate.

Currently, a bulletproof mechanism of the ceramic bulletproof panel is not fully established, but it is known that, when the bullet or fragment of a projectile initially collides with the ceramic plate, the ceramic plate is broken into several pieces, and most kinetic energy is dispersed to the ceramic fragment pieces to be consumed, and in the meantime, a pointed tip thereof is deformed into a mushroom shape or divided into several pieces, and is proceeded with an increased contact surface while consuming the energy remained in the laminated bulletproof fiber, such that it is not possible to pass through the ceramic plate.

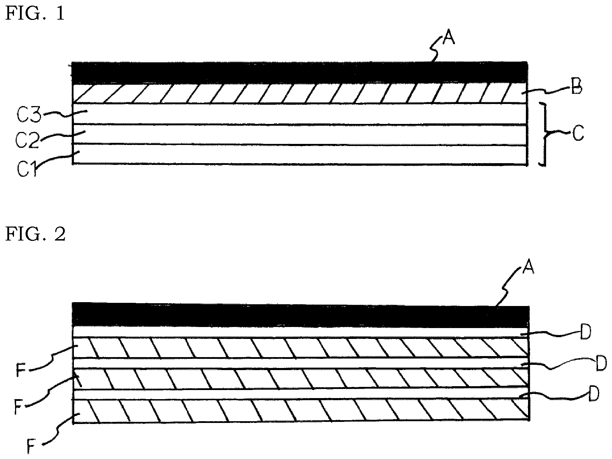

As a conventional ceramic bulletproof panel, Korean Patent Registration No. 10-0926746 discloses a ceramic bulletproof panel in which, as illustrated in FIG. 2, a thermoplastic adhesive film D such as an ethylene-vinyl acetate copolymer film and a bulletproof fabric F such as an aramid fabric are repeatedly laminated several times on one surface of a ceramic plate A.

FIG. 2 is a schematic cross-sectional view of the conventional ceramic bulletproof panel.

In the conventional ceramic bulletproof panel, the thermoplastic adhesive film D serves to adhere the ceramic plate A and the bulletproof fabric F with each other, or adhere the bulletproof fabric F and the bulletproof fabric F with each other.

However, in the case of the conventional ceramic bulletproof panel, there is a problem that an adhesive strength between the ceramic plate A and the bulletproof fabric F, or between the bulletproof fabric F and the bulletproof fabric F, which are adhered by the thermoplastic adhesive film D, is weak, such that a phenomenon of delaminating under a high-temperature environment frequently occurs and the bulletproof performance is deteriorated.

In addition, there is also a problem that, in order to manufacture the conventional ceramic bulletproof panel, the thermoplastic adhesive films D should to be inserted between the respective bulletproof fabrics F after cutting, thereby largely deteriorating workability.

### [Disclosure]

### [Technical Problem]

It is an object of the present invention to provide a bulletproof panel in which a ceramic plate A and a phenol resin impregnated aramid fabric laminate C consisting the bulletproof panel are not delaminated from each other even under a high-temperature environment, while providing significantly enhanced bulletproofing.

Another object of the present invention is to provide a bulletproof panel capable of greatly reducing workability in a manufacturing process since the process of inserting the conventional thermoplastic adhesive films between bulletproof fabrics may be omitted.

### [Technical Solution]

In order to solve the above-described problems, the present invention provides a bulletproof panel which is manufactured, as illustrated in FIG. 1, by laminating phenol resin impregnated aramid fabrics C1, C2 and C3 in several sheets to prepare a phenol resin impregnated aramid fabric laminate C, and inserting an epoxy resin impregnated fabric B between the phenol resin impregnated aramid fabric laminate C and the ceramic plate A to firmly bond the same with each other.

The phenol resin impregnated aramid fabrics C1, C2 and C3 mean an aramid fabric impregnated with one resin selected from a phenol resin and a phenol/polyvinyl butyral mixture resin.

### [Advantageous Effects]

According to the present invention, since the epoxy resin impregnated fabric B is disposed between the ceramic plate A and the phenol resin impregnated aramid fabric laminate C to increase the adhesive strength therebetween, the ceramic plate A and the phenol resin impregnated aramid fabric laminate C are not delaminated from each other even under a high-temperature environment, and thereby greatly enhancing the bulletproof performance.

In addition, according to the present invention, there is no need to insert thermoplastic adhesive films between the phenol resin impregnated aramid fabrics C1, C2 and C3 like in the prior art, and thereby greatly improving the workability.

### [Description of Drawings]

FIG. 1 is a cross-sectional view of an example of a bulletproof panel according to the present invention.
FIG. 2 is a cross-sectional view of a conventional ceramic bulletproof panel.

### [Best Mode]

Hereinafter, the present invention will be described in detail with reference to the accompanying drawings.

A bulletproof panel according to the present invention includes: (i) a ceramic plate A; (ii) at least one phenol resin impregnated aramid fabric laminate C having phenol resin impregnated aramid fabrics C1, C2 and C3 which are laminated thereon; and (iii) an epoxy resin impregnated fabric B disposed between the ceramic plate A and the phenol resin impregnated aramid fabric laminate C, and impregnated with an epoxy resin in a fabric.

FIG. 1 is a schematic cross-sectional view of the bulletproof panel of the present invention.

The phenol resin impregnated aramid fabrics C1, C2 and C3 mean an aramid fabric impregnated with one resin selected from a phenol resin and a phenol/polyvinyl butyral mixture resin.

In other words, the phenol resin impregnated aramid fabrics C1, C2 and C3 may be an aramid fabric impregnated with a phenol resin, or an aramid fabric impregnated with a phenol/polyvinyl butyral mixture resin.

When the phenol resin impregnated aramid fabrics C1, C2 and C3 are the aramid fabrics impregnated with a phenol/polyvinyl butyral mixture resin, a mixing ratio of the phenol resin to the polyvinyl butyral resin is 50 to 65 wt. % : 50 to 35 wt.%, the phenol resin has a molecular weight of 300 to 3,000, and the polyvinyl butyral resin has a molecular weight of 30,000 to 120,000, and more preferably 80,000 to 120,000, in terms of improving workability and bulletproof performance.

It is preferable to use an aramid fabric impregnated with a phenol/polyvinyl butyral mixture resin as the phenol resin impregnated aramid fabrics C1, C2 and C3 in order to minimize a phenomenon in which the impregnated resin layer is cracked by an impact applied thereto at bullet impacting. The reason is that the polyvinyl butyral resin is relatively unbreakable by the impact compared to the phenol resin.

As the fabric constituting the epoxy resin impregnated fabric B, high strength fabrics such as an aramid fabric, carbon fiber fabric, glass fiber fabric, etc., or typical synthetic fiber fabrics may be used.

it is preferable that the phenol resin impregnated aramid fabric laminate C is laminated with 2 to 30 sheets of phenol resin impregnated aramid fabrics C1, C2 and C3.

The epoxy resin impregnated fabric B and the phenol resin impregnated aramid fabric laminate C may be laminated and disposed on only one surface of the ceramic plate A as illustrated in FIG. 1, or laminated and disposed on both surfaces of the ceramic plate.

As illustrated in FIG. 1, when manufacturing a bulletproof product such as a bulletproof jacket using the bulletproof panel of the present invention, in which the epoxy resin impregnated fabric B and the phenol resin impregnated aramid fabric laminate C are laminated on only one surface of the ceramic plate A, the ceramic plate A portion is located on a front surface of the bulletproof product, and the epoxy resin impregnated fabric B and the phenol resin impregnated aramid fabric laminate C are located on a back surface of the bulletproof product, so as to prevent the fragments of the ceramic plate A broken by the impact at bullet impacting from being scattered, as well as minimize back surface deformation of the bulletproof product at bullet impacting.

Meanwhile, the bulletproof panel of the present invention in which the epoxy resin impregnated fabric B and the phenol resin impregnated aramid fabric laminate C are laminated on both surfaces of the ceramic plate A may prevent the bullet from being directly collided with the ceramic plate A, so as to effectively prevent the fragments of the ceramic plate A broken by the impact at bullet impacting from being scattered, as well as minimize the back surface deformation of the bulletproof product at bullet impacting.

In a preferred embodiment, the ceramic plate includes at least one of alumina, silicon carbide, silicon nitride, boron carbide, tungsten carbide, or tungsten boride, and is manufactured by high temperature sintering, high temperature and high pressure sintering, gel casting or reaction sintering.

Next, an embodiment of manufacturing the bulletproof panel according to the present invention will be described.

First, the aramid fabric is impregnated with a phenol resin or a phenol/polyvinyl butyral mixture resin to prepare phenol resin impregnated aramid fabric prepregs.

Meanwhile, the fabric is impregnated with an epoxy resin to prepare epoxy resin impregnated fabric prepregs.

Next, 2 to 30 sheets of the phenol resin impregnated aramid fabric prepregs prepared as described above are laminated in a mold for manufacturing a bulletproof panel, and the epoxy resin impregnated fabric prepregs prepared as described above are laminated thereon, and then a ceramic plate is again laminated thereon, followed by pressing and molding the same at 120 to 200°C under a pressure of 100 to 200 bar for 20 to 200 minutes, thereby manufacturing a bulletproof panel.

Herein, the 2 to 30 sheets of phenol resin impregnated aramid fabric prepregs laminated in the mold for manufacturing a bulletproof panel become 2 to 30 sheets of phenol resin impregnated aramid fabric laminates C after pressing and molding.

In addition, the epoxy resin impregnated fabric prepregs laminated in the mold for manufacturing a bulletproof panel are cured after pressing and molding become an epoxy resin impregnated fabric B, and serve to firmly adhere the ceramic plate A and the phenol resin impregnated aramid fabric laminate C with each other.

Since the epoxy resin impregnated fabric B is disposed between the ceramic plate A and the phenol resin impregnated aramid fabric laminate C to increase the adhesive strength therebetween, the ceramic plate A and the phenol resin impregnated aramid fabric laminate C are not delaminated from each other even under a high-temperature environment, and thereby greatly enhancing the bulletproof performance.

In addition, there is no need to insert thermoplastic adhesive films between the phenol resin impregnated aramid fabrics C1, C2 and C3 like in the prior art, and thereby greatly improving the workability.

Hereinafter, the present invention will be more clearly understood by the following examples and comparative examples. However, these examples are proposed for concretely explaining the present invention, while not limiting the scope of the present invention to be protected.

### Example 1

An aramid fabric which has a density of 450 g/m² and whose warp and weft have a fineness of 3,000 deniers was impregnated with 20 wt.% of phenol solution obtained by dissolving a phenol resin having a molecular weight of 3,000 in a methanol solvent to prepare phenol resin impregnated aramid fabric prepregs.

Next, a polyester fabric having a density of 200 g/m² was impregnated with 40 wt.% of an epoxy resin solution to prepare epoxy resin impregnated fabric prepregs.

Meanwhile, a ceramic plate A having a width of 250 mm, a length of 300 mm and a thickness of 6 mm was prepared.

Thereafter, 20 sheets of the phenol resin impregnated aramid fabric prepregs were sequentially laminated in a mold for manufacturing a bulletproof panel, and 1 sheet of the epoxy resin impregnated fabric prepreg was laminated thereon, and then 1 sheet of the ceramic plate A was again laminated thereon, followed by pressing and molding the same at 180°C under a pressure of 180 bar for 100 minutes, thereby manufacturing a bulletproof panel.

For the manufactured bulletproof panel, bulletproof performance was evaluated and results thereof are shown in Table 1 below.

### Example 2

An aramid fabric which has a density of 450 g/m² and whose warp and weft have a fineness of 3,000 deniers was impregnated with 20 wt.% of phenol solution obtained by dissolving a phenol resin having a molecular weight of 3,000 in a methanol solvent to prepare phenol resin impregnated aramid fabric prepregs.

Next, a polyester fabric having a density of 200 g/m² was impregnated with 40 wt.% of an epoxy resin solution to prepare epoxy resin impregnated fabric prepregs.

Meanwhile, a ceramic plate A having a width of 250 mm, a length of 300 mm and a thickness of 6 mm was prepared.

Next, 15 sheets of the phenol resin impregnated aramid fabric prepregs were sequentially laminated in a mold for manufacturing a bulletproof panel, and 1 sheet of the epoxy resin impregnated fabric prepreg was laminated thereon, and then 1 sheet of the ceramic plate A was again laminated thereon, followed by pressing and molding the same at 180°C under a pressure of 180 bar for 100 minutes, thereby manufacturing a bulletproof panel.

For the manufactured bulletproof panel, bulletproof performance was evaluated and results thereof are shown in Table 1 below.

### Example 3

An aramid fabric which has a density of 450 g/m² and whose warp and weft have a fineness of 3,000 deniers was impregnated with 20 wt.% of phenol/polyvinyl butyral solution obtained by dissolving a phenol resin having a molecular weight of 3,000 and a polyvinyl butyral resin having a molecular weight of 9,000 in a weight ratio of 60 : 40 in a methanol solvent to prepare phenol resin impregnated aramid fabric prepregs.

Next, a polyester fabric having a density of 200 g/m² was impregnated with 40 wt.% of an epoxy resin solution to prepare epoxy resin impregnated fabric prepregs.

Meanwhile, a ceramic plate A having a width of 250 mm, a length of 300 mm and a thickness of 6 mm was prepared.

Thereafter, 10 sheets of the phenol resin impregnated aramid fabric prepregs were sequentially laminated in a mold for manufacturing a bulletproof panel, and 1 sheet of the epoxy resin impregnated fabric prepreg was laminated thereon, and then 1 sheet of the ceramic plate A was again laminated thereon, followed by pressing and molding the same at 180°C under a pressure of 180 bar for 100 minutes, thereby manufacturing a bulletproof panel.

For the manufactured bulletproof panel, bulletproof performance was evaluated and results thereof are shown in Table 1 below.

### Comparative Example 1

An aramid fabric F which has a density of 450 g/m² and whose warp and weft have a fineness of 3,000 deniers and an adhesive film D made of an ethylene-vinyl acetate copolymer were repeatedly laminated ten times in a mold for manufacturing a bulletproof panel, and then 1 sheet of ceramic plate (250 mm width, 300 mm length, and 6 mm thickness) was laminated thereon, followed by pressing and molding the same at 180°C under a pressure of 180 bar for 100 minutes, thereby manufacturing a bulletproof panel.

For the manufactured bulletproof panel, bulletproof performance was evaluated and results thereof are shown in Table 1 below.

### Comparative Example 2

An aramid fabric F which has a density of 450 g/m² and whose warp and weft have a fineness of 3,000 deniers and an adhesive film D made of an ethylene-vinyl acetate copolymer were repeatedly laminated seven times in a mold for manufacturing a bulletproof panel, and then 1 sheet of ceramic plate (250 mm width, 300 mm length, and 6 mm thickness) was laminated thereon, followed by pressing and molding the same at 180°C under a pressure of 180 bar for 100 minutes, thereby manufacturing a bulletproof panel.

For the manufactured bulletproof panel, bulletproof performance was evaluated and results thereof are shown in Table 1 below.

### Comparative Example 3

An aramid fabric F which has a density of 450 g/m² and whose warp and weft have a fineness of 3,000 deniers and an adhesive film D made of an ethylene-vinyl acetate copolymer were repeatedly laminated five times in a mold for manufacturing a bulletproof panel, and then 1 sheet of ceramic plate (250 mm width, 300 mm length, and 6 mm thickness) was laminated thereon, followed by pressing and molding the same at 180°C under a pressure of 180 bar for 100 minutes, thereby manufacturing a bulletproof panel.

For the manufactured bulletproof panel, bulletproof performance was evaluated and results thereof are shown in Table 1 below.

**[Table 1]**

| Item | Average velocity V0 [m/s] | Backside deformation [mm] |
|---|---|---|
| Example 1 | 881 | 32 |
| Example 2 | 875 | 34 |
| Example 3 | 890 | 32 |
| Comparative Example 1 | 837 | 39 |
| Comparative Example 2 | 832 | 41 |
| Comparative Example 3 | 846 | 43 |

The average velocity V0 and backside deformation listed in Table 1 were determined by the following procedures.

### Measurement of average velocity V50 and backside deformation

An average velocity (m/s) to indirectly indicate the extent of bulletproof performance of the composite fabric was measured from a value obtained by averaging a velocity at which a bullet is completely penetrated and a velocity at which the bullet is partially penetrated using a 22 caliber bullet fragment simulating projectile (FSP) in accordance with MIL-STD-662F standard.

The backside deformation was evaluated by measuring a maximum diameter (mm) of a part protruded from the backside of the composite fabric due to impact at a velocity 426±15 m/s, by using 9 mm FMJ in accordance with Level IIIA of NIJ standard.

### [Description of Reference Numerals]

A: ceramic plate
B: epoxy resin impregnated fabric
C: phenol resin impregnated aramid fabric laminate
D: thermoplastic adhesive film
F: bulletproof fabric
C1, C2. C3: phenol resin impregnated aramid fabrics

### [Industrial Applicability]

The bulletproof panel of the present invention may be used as a bulletproof material for manufacturing a bulletproof jacket, bulletproof helmet, and the like.

## Claims

1. A bulletproof panel, comprising:
(i) a ceramic plate A;
(ii) at least one phenol resin impregnated aramid fabric laminate C having phenol resin impregnated aramid fabrics C1, C2 and C3 which are laminated thereon; and
(iii) an epoxy resin impregnated fabric B disposed between the ceramic plate A and the phenol resin impregnated aramid fabric laminate C, and impregnated with an epoxy resin in a fabric.

2. The bulletproof panel according to claim 1, wherein the phenol resin impregnated aramid fabrics C1, C2 and C3 are aramid fabrics impregnated with one resin selected from a phenol resin and a phenol/polyvinyl butyral mixture resin.

3. The bulletproof panel according to claim 1 or 2, wherein the phenol resin impregnated aramid fabric laminate C is laminated with 2 to 30 sheets of phenol resin impregnated aramid fabrics C1, C2 and C3.

4. The bulletproof panel according to claim 1 or 2, wherein the epoxy resin impregnated fabric B and the phenol resin impregnated aramid fabric laminate C are disposed on only one surface of the ceramic plate.

5. The bulletproof panel according to claim 1 or 2, wherein the epoxy resin impregnated fabric B and the phenol resin impregnated aramid fabric laminate C are disposed on both surfaces of the ceramic plate.
